# DEMANDE DE BREVET EUROPEEN

(11) **EP 1 008 889 A1**
(43) Date de publication de la demande: **14.06.2000**
(21) Numéro de dépôt: 99420234.9
(22) Date de dépôt: 01.12.1999
(51) Int. Cl.: G02C 5/22

(54) **Charnière de lunettes**

(30) Priorité: 07.12.1998 FR 9815557
(71) Demandeur: L'AMY S.A., F-39400 Morez (FR)
(72) Inventeur: Lamy, Marc, 39400 Morbier (FR)
(74) Mandataire: Moinas, Michel

(57) **Abrégé**

La charnière est destinée à articuler une branche (5) à un tenon (1) de monture. Elle comprend deux pièces de butée (20,22) qui sont fixées au tenon et une rotule (40) qui est fixée à une extrémité de la branche de façon telle que la branche soit disposée dans un plan diamétral de la rotule. Cette dernière est insérée entre les deux pièces de butée pour effectuer un mouvement de rotation lorsque la branche est déplacée en pivotement par rapport au tenon.

Selon l'invention, la rotule est pourvue d'un épaulement cylindrique (44) qui s'étend suivant un axe (A) perpendiculaire au plan diamétral et qui s'insère dans une portée cylindrique (36) formée dans l'une (22) des deux pièces de butée pour guider la rotation de la rotule lors du pivotement de la branche par rapport au tenon.

Par cet agencement, on réduit voire on élimine tout débattement latéral de la branche lors de son mouvement de pivotement par rapport au tenon.

## Description

L'invention se rapporte à une charnière de lunettes, et plus particulièrement à une charnière de lunettes qui possède une rotule pour articuler une branche à un tenon de monture.

Une telle charnière est connue notamment de la demande internationale WO 98/18041 déposée par la Demanderesse et publiée le 30 avril 1998.

La rotule, qui est par exemple un rubis ou un spinelle, est prise entre deux pièces de butée en forme de flasque, par l'intermédiaire de deux portées qui présentent une surface en couronne sphérique pour épouser le pourtour de la rotule. Insérée entre les deux flasques, la rotule effectue un mouvement de rotation lorsque la branche est déplacée en pivotement par rapport au tenon. Les deux pièces de butée sont disposées de part et d'autre du plan diamétral de la rotule et l'espace formé entre elles permet le passage de la branche lors du mouvement de pivotement.

Cette charnière offre de nombreux avantages qui ont été décrits dans la demande internationale. Cependant, un faible jeu latéral peut persister entre la branche et le tenon lors du mouvement de pivotement, et même dans la position de fermeture de la charnière, la branche étant rabattue contre la façade de la monture. Ce débattement latéral entre la branche et le tenon, même s'il est souvent imperceptible, ne saurait donner pleinement satisfaction à l'utilisateur de la monture.

Le but de l'invention est de limiter autant que faire se peut le débattement latéral de la branche par rapport au tenon dans une charnière du type de celle qui vient d'être décrite.

A cet effet, l'invention a pour objet une charnière de lunettes destinée à articuler une branche à un tenon de monture, qui comprend deux pièces de butée qui sont fixées au tenon et une rotule qui est fixée à une extrémité de la branche de façon telle que la branche soit disposée dans un plan diamétral de la rotule, et dans laquelle la rotule est insérée entre les deux pièces de butée pour effectuer un mouvement de rotation lorsque la branche est déplacée en pivotement par rapport au tenon, caractérisée en ce que la rotule est pourvue d'un épaulement cylindrique qui s'étend suivant un axe perpendiculaire audit plan diamétral et qui s'insère dans une portée cylindrique formée dans une des deux pièces de butée pour guider la rotation de la rotule lors du pivotement de la branche par rapport au tenon.

L'insertion de l'épaulement cylindrique dans la portée cylindrique de la pièce de butée permet de guider la rotation de la rotule de façon à réduire voire éliminer tout jeu de la branche par rapport au tenon lors de son mouvement de pivotement.

Selon une première variante de l'invention, l'épaulement cylindrique est formé dans un plan qui est parallèle et décalé par rapport au plan diamétral pour dissocier avantageusement la fixation de la branche à la rotule du guidage de cette dernière en rotation.

Selon une deuxième variante de l'invention, la charnière comprend une rondelle qui est montée autour de l'épaulement cylindrique et qui est logée dans un lamage formé dans la pièce de butée perpendiculairement à la portée cylindrique pour minimiser encore le frottement lors de la rotation de la rotule.

D'autres avantages de l'invention apparaîtront à la lecture de la description d'un mode de réalisation illustré par les dessins.

La figure 1 montre en vue éclatée une charnière avec une branche et un tenon de monture.

La figure 2 est une vue en coupe de la rotule fixée à une extrémité de la branche et insérée entre deux pièces de butée.

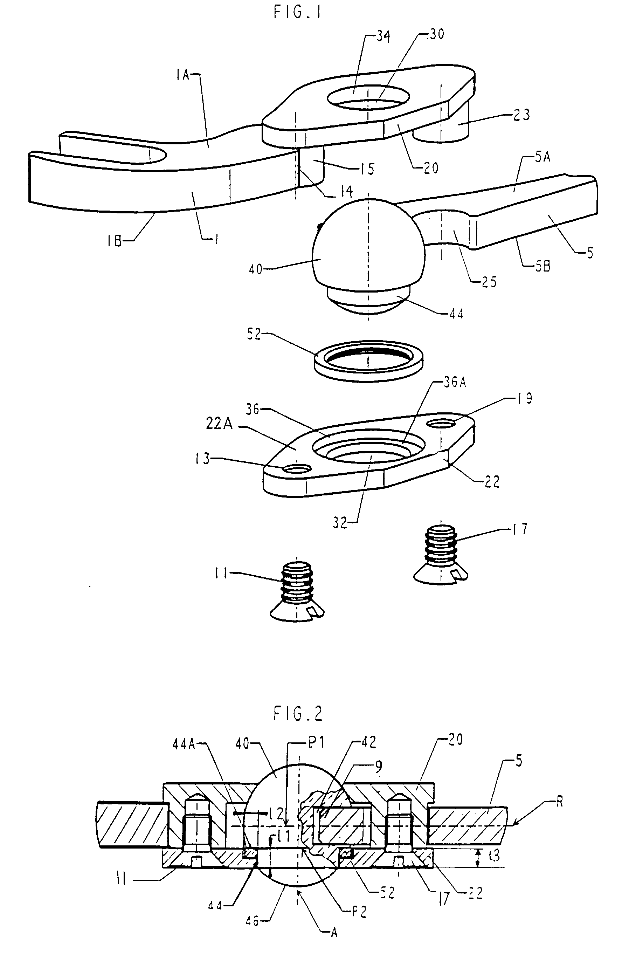

Une charnière destinée à articuler une branche 5 à un tenon 1 de monture comprend, figure 1, une rotule 40 en matériau dur et résistant du type d'une pierre semi-précieuse comme un rubis ou un spinelle, ou d'une céramique, d'un carbure de silicium ou d'un zircon. La branche 5 est fixée à la rotule au moyen d'un trou borgne 42, figure 2, qui est usiné dans la rotule suivant une direction radiale R et dans lequel s'insère un téton 9 formé à l'extrémité de la branche 5. On note que la direction radiale R du trou borgne 42 permet de disposer la branche 5 dans un plan diamétral P1 de la rotule 40.

La charnière comprend également deux pièces de butée 20 et 22, figure 1, qui sont sensiblement identiques et qui ont une forme de flasque plan. Les deux flasques sont disposés de part et d'autre du plan diamétral P1 de la rotule 40 et parallèlement à ce plan. Par la suite, l'un 20 des deux flasques sera dit supérieur et l'autre 22, inférieur.

Chaque flasque est muni d'une ouverture centrale 30 ou 32 dont le bord forme dans l'épaisseur du flasque une portée qui permet à la rotule d'effectuer un mouvement de rotation lorsqu'elle est insérée entre les deux flasques.

Figure 1, le tenon 1 possède deux faces planes parallèles 1A et 1B qui sont chacune en contact avec un des deux flasques. Entre les deux faces planes, une portée 14 est ménagée à une extrémité du tenon pour recevoir une entretoise filetée 15 solidaire du flasque supérieur 20. Dans l'exemple de la figure 1, la portée 14 est ouverte sur un secteur. Il est également prévu de former une portée fermée. L'assemblage du tenon 1 et des deux flasques est assuré par une vis 11 qui traverse un perçage latéral 13 du flasque inférieur 22 et qui est vissée dans l'entretoise.

Pour éviter une rotation du flasque supérieur par rapport au tenon, l'entretoise et la portée ménagée à l'extrémité du tenon ont une même section non circulaire, par exemple en ellipse. Il est prévu également de solidariser le tenon au flasque supérieur par exemple par brasage, ou encore de fabriquer le tenon et le flasque inférieur d'une seule pièce.

Les deux flasques sont maintenus superposés et espacés l'un par rapport à l'autre à l'aide d'une deuxième vis 17 qui traverse un deuxième perçage latéral 19 du flasque inférieur 22 et qui est vissée dans une deuxième entretoise filetée 23 solidaire du flasque supérieur 20.

Les deux entretoises 15 et 23 sont perpendiculaires au plan des flasques et ont de préférence une même longueur pour assurer le parallélisme des deux flasques. L'espace entre les deux flasques est déterminé par les deux entretoises et correspond à l'épaisseur du tenon mesurée entre ses deux faces planes 1A et 1B.

La rotule effectue une rotation par rapport aux deux flasques lorsque la branche est actionnée en pivotement par rapport au tenon. L'épaisseur de la branche mesurée entre deux faces planes parallèles 5A et 5B est légèrement inférieure à l'espacement des deux flasques pour permettre un pivotement de la branche sans frottement par rapport aux flasques.

La branche pivote par rapport au tenon entre une position de fermeture de la monture dans laquelle la branche est rabattue contre le tenon ou contre une façade solidaire du tenon, et une position d'ouverture de la monture dans laquelle la branche est écartée par rapport au tenon ou à la façade et est en butée contre la deuxième entretoise 23 par l'intermédiaire d'une portée recourbée 25.

Selon l'invention, la rotule 40 comprend un épaulement cylindrique 44 qui s'étend, figure 2, suivant un axe A perpendiculaire au plan diamétral P1 de la rotule, ou encore, qui est formé dans un plan P2 parallèle au plan diamétral P1. Cet épaulement cylindrique est destiné à s'insérer dans une portée cylindrique 36 formée dans l'épaisseur du flasque inférieur 22 par le bord de son ouverture centrale 32.

Comme indiqué précédemment, l'insertion de l'épaulement cylindrique 44 dans la portée cylindrique 36 du flasque inférieur 22 permet de guider la rotation de la rotule 40 de façon à réduire voire éliminer tout jeu de la branche 5 lors de son mouvement de pivotement par rapport au tenon 1.

Figure 2, l'épaulement cylindrique 44 est formé dans un plan P2 parallèle et décalé vers le flasque inférieur 22 par rapport au plan diamétral P1 pour permettre de percer le trou borgne 42 de fixation de la branche 5 à la rotule 40 au-dessus de l'épaulement. Cet agencement dissocie avantageusement la fixation de la branche à la rotule du guidage de cette dernière en rotation.

Il est prévu de monter l'épaulement cylindrique en appui contre une face plane 22A du flasque inférieur par le biais d'un bord 44A circulaire et parallèle au plan diamétral P1 de l'épaulement 44.

De préférence cependant, figures 1 et 2, une rondelle 52 est montée autour de l'épaulement cylindrique 44 et est logée dans un lamage 36A formé dans le flasque inférieur 22 au fond de l'ouverture centrale 32 et perpendiculairement à la direction axiale de la portée cylindrique 36. De cette façon, le bord 44A de l'épaulement cylindrique 44 est en contact avec la rondelle 52 et non pas directement en contact avec la face plane du flasque inférieur 22. En choisissant une rondelle à faible coefficient de frottement, par exemple en plastique comme un PTFE, on réduit le frottement de la rotule et on facilite le pivotement de la branche par rapport au tenon.

L'épaulement cylindrique est usiné dans la rotule de sorte qu'il possède une extrémité en forme de calotte sphérique 46 de même rayon que celui de la rotule 40. Autrement dit, l'épaulement cylindrique reste inscrit dans la boule matérialisée par la rotule, si bien que la longueur l1 de l'épaulement dans la direction axiale A et la largeur 12 du bord circulaire 44A dépendent l'une et l'autre du rayon de la rotule. De préférence, on choisit la longueur axiale de l'épaulement cylindrique sensiblement égale à la longueur axiale 13 de la portée cylindrique de façon à bénéficier d'un guidage important de la rotule en rotation.

Figure 1, l'ouverture centrale 30 du flasque supérieur 20 forme par son bord 34 une portée sphérique qui épouse le pourtour de la rotule 40 pour faciliter la rotation de cette dernière entre les deux pièces de butée.

Lors de l'assemblage de la charnière, on insère l'épaulement cylindrique 44 de la rotule 40 dans la portée cylindrique 36 du flasque inférieur 22. Le cas échéant, on intercale une rondelle plastique 52 logée dans le lamage 36A du flasque inférieur 22. On dispose le flasque supérieur 20 en appui contre la rotule 40 du côté opposé au flasque inférieur 22. Si le tenon n'est pas solidarisé avec le flasque supérieur ou inférieur, on l'insère entre les deux flasques en appuyant la portée 14 contre l'entretoise filetée 15 du flasque supérieur 20. Enfin on assemble les deux flasques par vissage des vis 11 et 17 dans les entretoises filetées 15 et 20.

Il faut noter que l'épaulement cylindrique inséré dans la portée cylindrique d'une des deux pièces de butée suffit parfaitement au guidage en rotation de la rotule, de sorte qu'il n'est pas nécessaire de prévoir un deuxième épaulement cylindrique dans un plan parallèle au plan diamétral destiné à coopérer avec une deuxième portée cylindrique formée dans l'autre pièce de butée, même si cette possibilité est laissée à la disposition du créateur de la monture.

Le guidage en rotation à l'aide d'un seul épaulement cylindrique représente par conséquent une solution plus économique qu'un double épaulement. Les usinages de l'épaulement cylindrique dans la rotule et de la portée cylindrique dans l'une des pièces de butée sont simples à réaliser, en particulier sur des charnières existantes conformes à la demande internationale citée précédemment. Le jeu éventuel de la branche par rapport au tenon est corrigé avec un minimum de pièces et d'usinages supplémentaires.

Il faut aussi noter que la fixation de la branche à la rotule est avantageusement dissociée du guidage en rotation de la rotule.

On remarquera que le problème du guidage en rotation de la pièce d'articulation entre la branche et le tenon se pose différemment lorsque l'on utilise une rotule ou une broche cylindrique. Dans ce dernier cas, des portées cylindriques suffisent à guider la rotation de la broche au cours du mouvement de pivotement de la branche par rapport au tenon. Deux épaulements, supérieur et inférieur, sont cependant à prévoir, non pas pour assurer le guidage en rotation, mais pour maintenir la broche insérée entre les deux pièces de butée.

Dans le cas de l'invention, il n'est pas nécessaire de prévoir un double épaulement supérieur et inférieur pour assurer le guidage en rotation. On réalise ainsi l'économie d'un deuxième usinage dans la masse de la pièce d'articulation, comme indiqué précédemment.

Par ailleurs, pour un même rayon, et donc pour une même facilité de perçage du trou borgne suivant une direction radiale pour la fixation de la branche sur la pièce d'articulation, une rotule présente un encombrement plus faible par rapport à une broche cylindrique.

De surcroît, la forme sphérique de la rotule, qui ajoute à l'esthétique de la charnière et de la monture, n'est pas altérée par l'épaulement cylindrique usiné de façon à s'inscrire dans la boule matérialisée par la rotule.

Autrement dit, la solution d'une articulation en forme de tige entre la branche et le tenon, même si elle apparaît au premier abord comme une solution plus simple, ne saurait présenter les avantages d'une rotule comme dans l'invention. C'est d'autant plus vrai si la rotule est une pierre semi-précieuse qui confère à la charnière et à la monture un caractère de bijou. La forme sphérique de la pierre est visible notamment par le biais des calottes sphériques qui font saillie par rapport aux deux flasques.

Au demeurant, le diamètre de base des deux calottes sphériques définirait dans la rotule une tige cylindrique par définition plus étroite que la rotule elle-même. D'où il résulterait que le perçage d'un trou borgne suivant une direction radiale, si même il restait possible compte-tenu du diamètre en question, fragiliserait la tige cylindrique, et à moins de prévoir un organe de fixation en forme de bague qui cacherait encore plus la pierre semi-précieuse. De surcroît, les deux calottes sphériques ne pourraient être obtenues que par des opérations d'usinage de la tige cylindrique plus compliquées que celles mises en oeuvre pour l'usinage de la rotule.

## Revendications

1. Charnière de lunettes destinée à articuler une branche (5) à un tenon (1) de monture qui comprend, deux pièces de butée (20,22) qui sont fixées au tenon, et une rotule (40) qui est fixée à une extrémité de la branche de façon telle que la branche soit disposée sensiblement dans un plan diamétral (P1) de la rotule et qui est insérée entre les deux pièces de butée pour effectuer un mouvement de rotation lorsque la branche est déplacée en pivotement par rapport au tenon, caractérisée en ce que la rotule est pourvue d'un épaulement cylindrique (44) qui s'étend suivant un axe (A) perpendiculaire audit plan diamétral (P1) et qui s'insère dans une portée cylindrique (36) formée dans l'une (22) des deux pièces de butée pour guider la rotation de la rotule lors du pivotement de la branche par rapport au tenon.

2. Charnière selon la revendication 1, caractérisée en ce que l'épaulement cylindrique (44) est formé dans un plan (P2) parallèle et décalé par rapport au plan diamétral (P1).

3. Charnière selon la revendication 2, caractérisée en ce que la branche (5) est fixée à la rotule au moyen d'un trou borgne (42) qui est usiné dans la rotule suivant une direction radiale (R) et dans lequel s'insère un téton (9) formé à l'extrémité de la branche.

4. Charnière selon la revendication 1 ou 2, caractérisée en ce que l'épaulement cylindrique (44) reste inscrit dans la boule matérialisée par la rotule (40).

5. Charnière selon la revendication 1, 2, 3 ou 4, caractérisée en ce que l'épaulement cylindrique (44) est en appui contre une face (22A) de la pièce de butée par un bord (44A) perpendiculaire à la direction axiale (A).

6. Charnière selon la revendication 1, 2, 3 ou 4, caractérisée en ce qu'elle comprend une rondelle (52) qui est montée autour de l'épaulement cylindrique et qui est logée dans un lamage (36A) formé dans la pièce de butée (22) perpendiculairement à la portée cylindrique.

7. Charnière selon l'une des revendications 1 à 6, caractérisée en ce qu'elle comprend une portée sphérique (34) qui est formée dans l'autre (20) pièce de butée.
